# EUROPÄISCHE PATENTSCHRIFT

(11) **EP 2 250 037 B1**
(45) Veröffentlichungstag und Bekanntmachung des Hinweises auf die Patenterteilung: **22.05.2019**
(21) Anmeldenummer: 08872046.1
(22) Anmeldetag: 26.11.2008
(51) Int. Cl.: B60C 23/06

(54) **VERFAHREN ZUR BESTIMMUNG EINER BELADUNG EINES FAHRZEUGS**
METHOD FOR DETERMINING THE LOADING OF A VEHICLE
PROCÉDÉ DE DÉTERMINATION DU CHARGEMENT D'UN VÉHICULE

(30) Priorität: 06.02.2008 DE 102008007775
(43) Veröffentlichungstag der Anmeldung: 17.11.2010
(73) Patentinhaber: Robert Bosch GmbH, 70442 Stuttgart (DE)
(72) Erfinder: PANNEK, Thorsten, 70176 Stuttgart (DE); KECK, Marian, 71083 Herrenberg (DE)
(86) Internationale Anmeldenummer: PCT/EP2008/066178
(87) Internationale Veröffentlichungsnummer: WO 2009/097926

(56) Entgegenhaltungen:
- EP-A- 1 813 493
- WO-A-2005/056311

## Beschreibung

### Stand der Technik

Das Dokument WO 2005/056311 A2 beschreibt ein Verfahren zur Berechnung einer Reifenaufstandslänge.

Mit Zunahme der Fahrzeuge, die am Straßenverkehr teilnehmen, sind auch die Anforderungen an aktive und passive Sicherheitssysteme in den Fahrzeugen gestiegen. Aufgrund dessen hat in den letzten Jahren nicht nur die Zahl der in Fahrzeugen verwendeten Sicherheitssysteme, z.B. Anti-Blockiersystem, Anti-Schlupfregelung, elektronisches Stabilitätsprogramm, Airbag, etc. immer weiter zugenommen, sondern auch deren Komplexität. Zusätzlich zu den Sicherheitssystemen wurden auch immer mehr Komfortsysteme, z.B. automatische Niveauregelung, einstellbares Fahrwerk, etc. auf Wunsch der Fahrer in die Fahrzeuge integriert. Diese Sicherheits- und Komfortsysteme sind auf verschiedenste Daten einer Vielzahl unterschiedlicher Sensoren angewiesen. Zu den oben erwähnten Sicherheits- und Komfortsystemen zählen auch sogenannte Reifendruck-Kontrollsysteme, die immer weitere Verbreitung finden. Bei Reifendruck-Kontrollsystemen wird der Reifendruck überwacht, wodurch der Fahrer vor einem plötzlichen, sowie vor einem schleichenden Druckverlust im Reifen gewarnt werden kann. Zusätzlich spielt bei Reifendruck-Kontrollsystemen auch der Beladungszustand des Fahrzeugs eine nicht zu vernachlässigende Rolle, da anhand des Beladungszustandes eine beladungsabhängige Reifendruckempfehlung, für ein einzelnes Rad oder alle Räder, an den Fahrer ausgegeben werden kann.

Aus dem Stand der Technik sind Verfahren und Vorrichtungen bekannt, mit denen es möglich ist, Beladungsmessungen basierend auf einem Beschleunigungssignal, dem Reifendruck und der Temperatur durchzuführen.

Aus der WO 2005/005950 A1 ist beispielsweise ein Verfahren bekannt, mit dem es möglich ist, Beladungsänderungen basierend auf dem Amplitudenverlauf des Beschleunigungssignals, des Reifendruck und der Temperatur zu bestimmen.

Diese bekannten Verfahren weisen jedoch den Nachteil auf, dass sie zur Bestimmung einer Beladungsänderung zusätzlich zu einem Beschleunigungssignal auch Informationen über Reifendruck und Temperatur benötigen.

### Offenbarung der Erfindung

### Vorteile der Erfindung

Die vorliegende Erfindung zeigt ein Verfahren zur Bestimmung einer Beladung eines Fahrzeugs mit den Merkmalen des Anspruchs 1, sowie eine Vorrichtung gemäß Anspruch 9, einem Computerprogramm gemäß Anspruch 10 und einem Computerprogrammprodukt gemäß Anspruch 11.

Vorteilhafte Ausbildungen und Weiterentwicklungen der Erfindung werden durch die in den abhängigen Ansprüchen angegebenen Maßnahmen ermöglicht.

In einem Ausführungsbeispiel erfolgt die Bestimmung einer Änderung der Aufstandsfläche eines Reifens, auf Grundlage eines der Drehung des Reifens zuordenbaren, von einem Sensor abgegebenen Beschleunigungssignals, mit den folgenden Schritten: Aufnehmen mindestens eines der Drehung des Reifens zuordenbaren Beschleunigungssignals g₁; Auslesen eines gespeicherten, der Drehung des Reifens zuordenbaren Referenzbeschleunigungssignals g₀; Bilden einer Differenz aus dem Beschleunigungssignal g1 und dem Referenzbeschleunigungssignals g₀; und/oder Bestimmen der Änderung der Aufstandsfläche des Reifens auf Grundlage der gebildeten Differenz der Beschleunigungssignale.

Die Aufstandsfläche des Reifens bezeichnet den Flächenabschnitt der Reifenoberfläche, der mit dem Untergrund in Verbindung steht.

Der das Beschleunigungssignal abgebende Sensor kann ein piezoelektrischer Beschleunigungssensor, oder ein mikro-elektro-mechanisches System sein. Bei einem piezoelektrischen Beschleunigungssensor werden Druckschwankungen durch ein piezokeramisches Sensorplättchen in elektrische Signale umgewandelt, die entsprechend weiterverarbeitet werden können. Bei einem mikro-elektro-mechanischen System besteht der Sensor aus einem Feder-Masse-System, bei dem die "Federn" aus Silizium-Stegen und auch die Masse aus Silizium besteht. Durch die Auslenkung bei Beschleunigung kann zwischen den Federn und der Masse eine Kapazitätsänderung gemessen werden die proportional zu der Beschleunigung ist.

Das von dem Sensor abgegebene Beschleunigungssignal kann einen kontinuierlichen oder einen diskreten Verlauf aufweisen. Das von dem Sensor abgegebene Beschleunigungssignal kann wiederum kontinuierlich oder zeitdiskret, d.h. in bestimmten zeitlichen Abständen, aufgenommen werden.

Das aufgenommene Beschleunigungssignal kann mittels Filterung in ein pulsweitenmoduliertes Signal (PWM-Signal) gewandelt werden. Das PWM-Signal kann ein Tastverhältnis aufweisen. Das Tastverhältnis kann dem Verhältnis der Reifenaufstandsfläche zu dem Reifenumfang entsprechen. Durch eine Veränderung des Tastverhältnisses kann eine Veränderung der Reifenaufstandsfläche erfasst werden. Die Veränderung der Reifenaufstandsfläche kann aufgrund einer Zuladungsänderung des Fahrzeugs und/oder einer Änderung der Profiltiefe erfolgen.

Es ist ebenso möglich dass aus dem aufgenommenen Beschleunigungssignal mittels Filterung ein oder mehrere Frequenzanteile extrahiert werden und dieser extrahierte Frequenzanteil einer Transformation, wie nachfolgend beschrieben, zugeführt wird. Dies hat den Vorteil, dass der volle Informationsgehalt aus dem aufgenommenen Signal erhalten bleibt.

Mittels einer Transformation wird das Spektrum des Beschleunigungssignals berechnet. Die Berechnung des Spektrums kann mittels Fourieranalyse, Fast-Fourieranalyse oder anderen geeigneten Berechnungsverfahren erfolgen. Das so berechnete Spektrum kann anschließend mit Bezug auf Beschleunigung und/oder Frequenz normiert werden. Die Fourieranalyse bzw. die Fast-Fourieranalyse hat den Vorteil, dass keinerlei Informationsgehalt aus dem aufgenommenen Signal verloren geht.

Ein Vorteil dieses Verfahrens ist, dass eine Änderung der Aufstandsfläche des Reifens eine proportionale Änderung des Spektrums zur Folge hat, die entsprechend ausgewertet werden kann.

Erfindungsgemäß kann das berechnete Spektrum des Beschleunigungssignals über mehrere Drehungen des Reifens aufgenommen und zwischengespeichert werden. Aus den mehreren Spektren der Beschleunigungssignale kann ein Mittelwert oder mittleres Spektrum gebildet werden. Dieser Mittelwert kann ein arithmetischer Mittelwert, ein Median oder ein gleitender Durchschnitt sein. Die Anzahl der nacheinander aufgenommenen Beschleunigungssignale kann 2 bis 20, vorzugsweise 4 bis 15, weiter vorzugsweise 6 bis 10, weiter vorzugsweise 8 betragen.

In einem Ausführungsbeispiel kann mindestens ein Referenzbeschleunigungssignal mit Bezug auf das durch der Drehung des Reifens abgegebene Beschleunigungssignal hinterlegt sein. Das mindestens eine Referenzbeschleunigungssignal kann dem abgegebenen Beschleunigungssignal eines unbelasteten oder voll belasteten, überlasteten Reifens entsprechen. Auch ist es möglich, dass das Referenzbeschleunigungssignal mit dem verwendeten Reifentyp in Zusammenhang steht.

Das Referenzsignal kann mit dem erfassten Beschleunigungssignal verglichen werden. Aus dem Vergleich der Signale kann der Belastungszustand des Reifens abgeleitet werden. Es kann durch den Vergleich der Signale auch eine Veränderung der Belastung (Zunahme / Abnahme) und/oder eine Abnahme der Profiltiefe detektiert werden.

Ein weiterer Aspekt betrifft eine Vorrichtung zur Bestimmung einer Änderung der Aufstandsfläche eines Reifens die derart eingerichtet ist, um eine Änderung der Aufstandsfläche eines Reifens, auf Grundlage eines der Drehung des Reifens zuordenbaren, von einem Sensor abgegebenen Beschleunigungssignals mit den folgenden Schritten zu bestimmen: Aufnehmen mindestens eines der Drehung des Reifens zuordenbaren Beschleunigungssignals g₁; Auslesen eines gespeicherten, der Drehung des Reifens zuordenbaren Referenzbeschleunigungssignals g₀; Bilden einer Differenz aus dem Beschleunigungssignal g1 und dem Referenzbeschleunigungssignals g₀; und/oder Bestimmen der Änderung der Aufstandsfläche des Reifens auf Grundlage der gebildeten Differenz der Beschleunigungssignale.

### Kurze Beschreibung der Zeichnungen

Die Erfindung wird nachstehend anhand der beigefügten Zeichnungen beispielhaft näher erläutert. Es zeigen:
- Fig. 1: eine schematische Darstellung eines Rades mit einem Beschleunigungssensor;
- Fig. 2: eine schematische Darstellung aufgenommener Beschleunigungssignale;
- Fig. 3: eine schematische Darstellung von Spektren der Beschleunigungssignale;
- Fig. 4: eine schematische Darstellung normierter Spektren der Beschleunigungssignale;
- Fig. 5: ein Flussdiagramm des erfindungsgemäßen Verfahrens; und
- Fig. 6: ein Blockschaltbild einer Schaltungsanordnung.

### Ausführungsformen der Erfindung

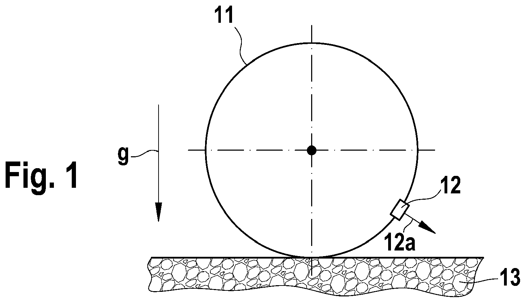

Fig. 1 stellt schematisch ein Rad 11 eines Fahrzeugs (nicht gezeigt) dar, das auf einem Untergrund 13 abrollt. An dem Rad 11 ist ein Beschleunigungssensor 12 angebracht. Das Rad kann aus einer Felge und einem Reifen bestehen. Der Sensor ist an bzw. in dem Reifen angebracht. Der Sensor kann ein Sensormodul sein, das neben einem Beschleunigungssensor 12 noch einen Drucksensor und/oder einen Temperatursensor aufweist. Auf das Rad 11 und den Beschleunigungssensor 12 wirkt die Erdbeschleunigung g. Bei einer Drehung des Rads 11 wirkt auf den Beschleunigungssensor 12 außerhalb der Aufstandsfläche des Reifens eine Zentripetalkraft 12a in radialer Richtung. Diese Zentripetalkraft 12a ist proportional zu der Drehgeschwindigkeit des Rades 11. Im Bereich der Aufstandsfläche des Reifens geht die Rotationsbewegung des Sensors 12 in eine Linearbewegung entlang des Untergrundes 13 über, wodurch nur noch die Erdbeschleunigung g auf den Sensor 12 wirkt.

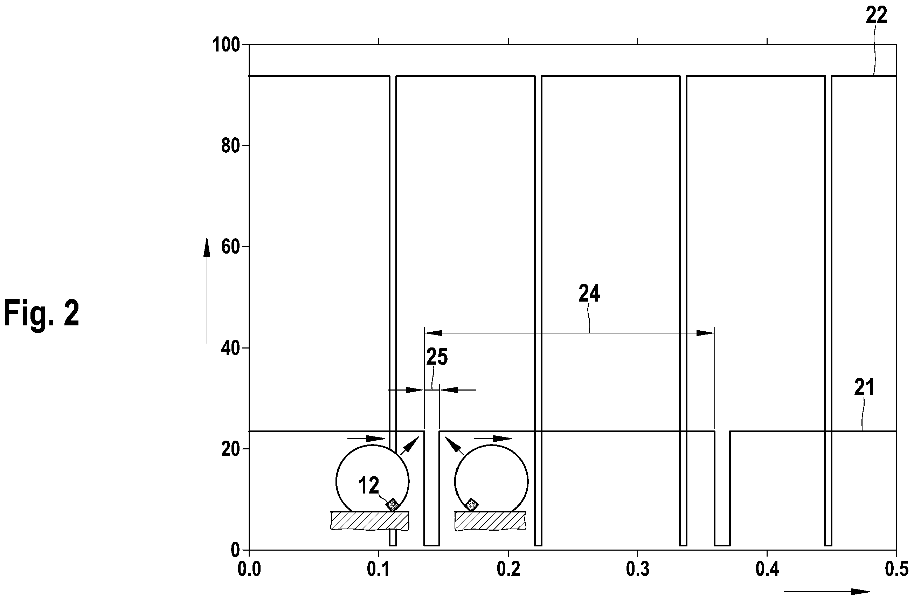

In Fig. 2 ist der Verlauf des von dem Sensor 12 abgegebenen Beschleunigungssignals schematisch dargestellt. Die Amplitude des Signals ist quadratisch-proportional zu der Rotationsgeschwindigkeit des Rads 11. Auf der Abszisse des in Fig. 2 dargestellten Diagramms ist die Zeit in Sekunden aufgetragen. Auf der Ordinate des in Fig. 2 dargestellten Diagramms ist die Beschleunigung in Vielfachen der Erdbeschleunigung g aufgetragen. Mit dem Bezugszeichen 21 ist der Verlauf eines Beschleunigungssignals bei einer ersten Geschwindigkeit v1 bezeichnet. Mit dem Bezugszeichen 22 ist der Verlauf eines Beschleunigungssignals bei einer zweiten Geschwindigkeit v2 bezeichnet, wobei die Geschwindigkeit v2 ist größer als die Geschwindigkeit v1. Wie bereits erwähnt, geht die Rotationsbewegung des Sensors 12 im Bereich der Aufstandsfläche des Reifens in eine Linearbewegung entlang des Untergrunds 13 über. Diese Linearbewegung dauert an, bis der Sensor 12 den Bereich der Aufstandsfläche des Reifens wieder verlässt. Während der Linearbewegung wirkt auf den Sensor 12 nur die Erdbeschleunigung von ca. 1g. Die Zeitdauer, während der sich der Sensor in einer Linearbewegung befindet ist mit dem Bezugszeichen 25 bezeichnet. Die Zeitspanne von Beginn einer Linearbewegung bis zum Beginn einer weiteren Linearbewegung, die Periodendauer des Signals, ist mit dem Bezugszeichen 24 bezeichnet. Wie man aus Fig. 2 ersehen kann, entspricht der Verlauf 21, bzw. der Verlauf 22 im Wesentlichen einem PWM-Signal. Das PWM-Signal weist ein Tastverhältnis auf. Das Tastverhältnis gibt für den Signalverlauf 21 das Verhältnis zwischen dem Anteil der Linearbewegung 25 und der Periodendauer 24 an. Das Gleiche gilt auch hinsichtlich des Signalverlaufs 22. Die absolute Änderung des Tastverhältnisses liegt zwischen 1% bis 3%, vorzugsweise bei 2%. Daraus folgt, dass das Tastverhältnis bei einem Fahrzeug, abhängig von Reifendruck, Temperatur und Reifentyp, zwischen ca. 6% (voll beladenes Fahrzeug) und ca. 3% (leeres Fahrzeug) liegt. Bei einem anderen Fahrzeug kann das Tastverhältnis, wiederum abhängig von Reifendruck, Temperatur und Reifentyp, zwischen ca. 8% (voll beladenes Fahrzeug) und ca. 6% (leeres Fahrzeug) liegen.

In einer bevorzugten Ausführung wird das erfindungsgemäße Verfahren in einem Geschwindigkeitsbereich zwischen 10 km/h und 100 km/h ausgeführt. Ist die Geschwindigkeit des unterhalb eines vorbestimmten Schwellenwertes, ist das Signal-Rausch-Verhältnis des Beschleunigungssensors schlecht, d.h. der Rauschanteil am Messsignal ist zu hoch. Andererseits, wenn die Geschwindigkeit des Fahrzeugs oberhalb eines weiteren vorbestimmten Schwellenwertes liegt, geht der Sensor 12 in Sättigung und der Bereich der Reifenaufstandsfläche kann nicht mehr detektiert werden.

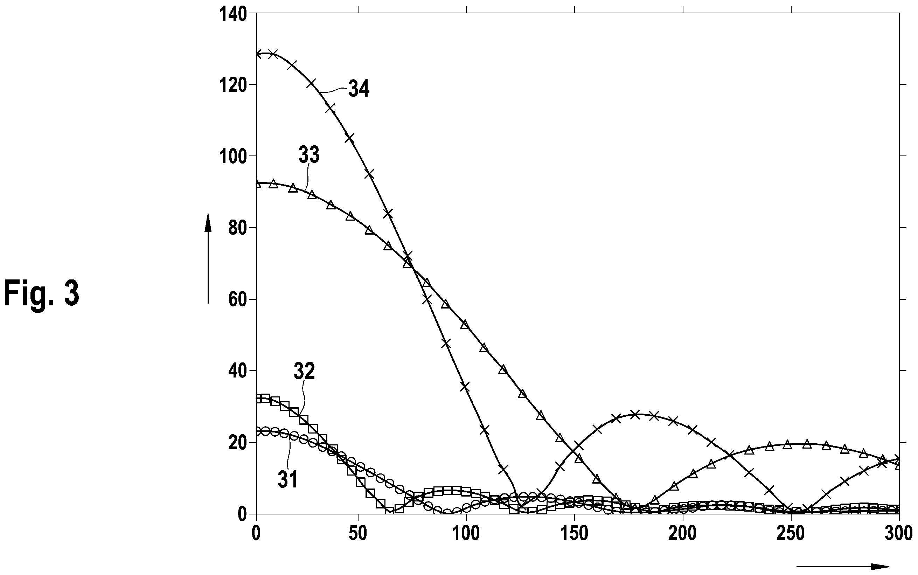

Fig. 3 zeigt schematische verschiedene Spektren von Beschleunigungssignalen. Die Spektren 31 und 32 beziehen sich auf eine erste Geschwindigkeit v1 von ca. 30 km/h, wobei das Spektrum 31 ein Beschleunigungssignal mit einem Tastverhältnis von 5% darstellt und das Spektrum 32 ein Beschleunigungssignal mit einem Tastverhältnis von 7% darstellt. Die Spektren 33 und 34 hingegen, beziehen sich auf eine zweite Geschwindigkeit v2 von ca. 60 km/h, wobei das Spektrum 33 ein Beschleunigungssignal mit einem Tastverhältnis von 5% darstellt und das Spektrum 34 ein Beschleunigungssignal mit einem Tastverhältnis von 7% darstellt. Wie in Fig. 3 zu erkennen ist, führt eine Erhöhung der Reifenaufstandslänge zu einer Zunahme des Tastverhältnisses des PWM-Signals. Die Zunahme des Tastverhältnisses führt wiederum zu einem deutlichen Anstieg des Beschleunigungsanteils der Grundfrequenz und zu einem stärkeren Abfall der höheren Vielfachen dieser Frequenz. Eine Verringerung der Aufstandsfläche hingegen führt zu einer Verringerung des Tastverhältnisses des PWM-Signals und somit zu einem Abfall des Beschleunigungssignals der Grundfrequenz.

Basierend auf der Änderung des Spektrums bei einer Änderung des Tastverhältnisses kann eine Bewertung mit Bezug auf eine Beladungsänderung und/oder Profiltiefenänderung erfolgen. Beispielsweise ist es möglich, das von dem Sensor 12 abgegebene Beschleunigungssignal über eine oder mehrere Radumdrehungen einer Fouriertransformation oder einer Fast-Fouriertransformation zu unterziehen und die Änderungsrate der frequenzdiskreten Beschleunigungsanteile im unteren Frequenzbereich zu verfolgen. Wird eine Veränderung zwischen den Beschleunigungsanteilen detektiert, hat eine Beladungsänderung stattgefunden. Wird beispielsweise der Abfall der Beschleunigungsanteile zu höheren Frequenzen hin steiler, so hat eine Zuladung stattgefunden. Umgekehrt gilt, wenn der Abfall der Beschleunigungsanteile zu höheren Frequenzen hin flacher ist, hat eine Abnahme der Zulandung stattgefunden. Das Maß der Änderungsrate kann dabei zur qualitativen als auch zur quantitativen Bestimmung der Beladungsänderung herangezogen werden.

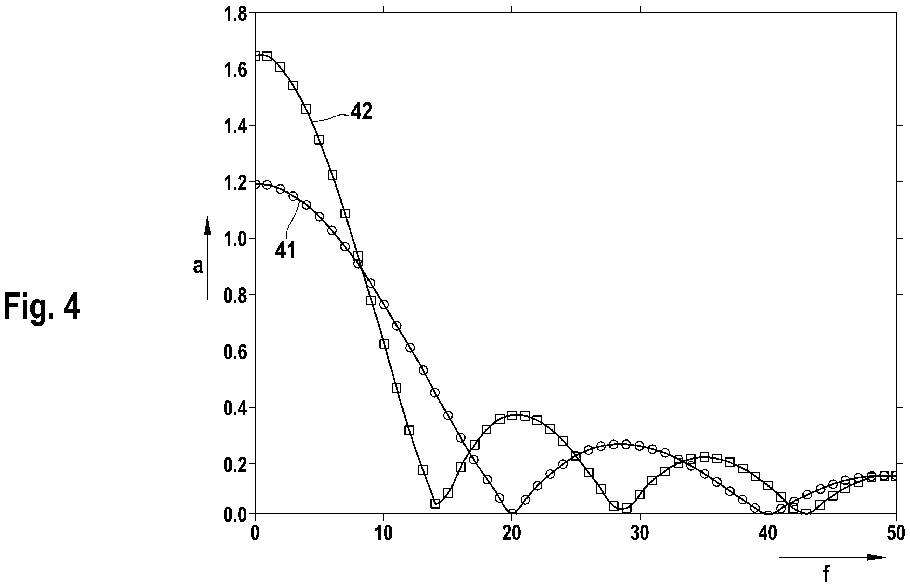

Fig. 4 zeigt eine schematische Darstellung normierter Spektren der Beschleunigungssignale. Die in Fig. 3 gezeigten Spektren sind abhängig von der Umdrehungsgeschwindigkeit des Rades 11. Um diese Abhängigkeit zu kompensieren, kann in einer weiteren Ausgestaltung das berechnete Fourierspektrum skaliert bzw. normiert werden. Ein Maß proportional zur Geschwindigkeit ist z.B. die Drehzahl des Rads 11 oder indirekt deren Kehrwert die Umlaufperiode. Da die oben genannten quadratischen und linearen Zusammenhänge zwischen Zentripetalbeschleunigung und Raddrehzahl bzgl. der Geschwindigkeit existieren bieten sich entsprechende Skalierungsfaktoren für die Amplitude des Beschleunigungssignals und die Frequenz des Beschleunigungssignals an.

In den in Fig. 3 dargestellten Spektren 31, 32, 33 und 34 werden die Beschleunigung (Abszisse) mit dem Quadrat der Umlaufperiode und die Frequenz (Ordinate) mit der Umlaufperiode des Reifens multipliziert. Die Frequenzverläufe der Signale liegen damit auch bei unterschiedlichen Geschwindigkeiten übereinander. Das Spektrum 41 entspricht den skalierten Spektren 31 bzw. 33 mit einem Tastverhältnis von 5%, und das Spektrum 42 entspricht den skalierten Spektren 32 bzw. 34 mit einem Tastverhältnis von 7%. Aus Fig. 4 ist zu erkennen, dass nur eine Veränderung des Tastverhältnisses zu einer Veränderung des Kurvenverlaufs führt, nicht aber eine Veränderung der Geschwindigkeit.

Die Umlaufperiode des Reifens kann aus dem Zeitsignal der Radialbeschleunigungen ermittelt werden. Im Wesentlichen entspricht die Umlaufperiode der Periodendauer 24. Über einen einfachen Beschleunigungsschwellenwert leicht oberhalb der Erdgravitation von 1g, die wie oben ausgeführt im Bereich der Aufstandsfläche vorliegt, kann z.B. der Eintritt in den Bereich der Reifenaufstandsfläche detektiert werden und für eine Triggerung einer Zeitmessung herangezogen werden. Die Zeit zwischen zwei Eintrittspunkten entspricht der Reifenumlaufzeit.

Eine weitere Möglichkeit der Auswertung ist ein frequenzdiskreter Amplitudenvergleich. Dies kann entweder im skalierten Frequenzspektrum erfolgen, oder es können aus dem Beschleunigungssignal über einen oder mehrere Bandpass-Filter ein oder mehrere Einzelfrequenzanteile extrahiert werden. Dies resultiert in verschiedenen Sinussignalen, deren Amplitude sich bei einer Änderung des Tastverhältnisses ändert. Bevor aus der Amplitudenänderung ein Rückschluss auf das Tastverhältnis erfolgt, können auch die Amplituden, wie oben beschrieben, über die Umlaufzeit mit den entsprechenden Verfahren skaliert werden.

Als mögliche Filterfrequenz bietet sich einerseits die Grundfrequenz des Beschleunigungssignals, die Raddrehzahl oder der Kehrwert der Umlaufperiode an. Die Filterfrequenz des Bandpass-Filters muss dabei so schmal sein, dass Vielfache der Grundfrequenz den Filter nicht passieren können. Dies ist notwendig, da die Phasenlage der Vielfachen der Grundfrequenz stark verschoben ist. Die Grundfrequenz ist geschwindigkeitsabhängig und kann vor der Filterung aus dem Reifensignal bestimmt werden. Hier kann ebenfalls das oben genannte Verfahren zur Bestimmung der Reifenumlaufperiode verwendet werden. Auch kann die Skalierung der geschwindigkeitsabhängigen Beschleunigungsamplitude, wie oben beschrieben, anhand der Umlaufzeit vorgenommen werden.

Für die genannten Verfahren zur Bestimmung der Reifenaufstandslänge über die Frequenzanalyse sind nur die Signalverläufe im Bereich der Reifenaufstandfläche und deren zeitliches Aufeinanderfolgen (Umlaufzeit) interessant. Außerhalb des Bereichs der Reifenaufstandsfläche ist lediglich die Zentripetalbeschleunigung wichtig. Daher ist ein Aufzeichnen (Sampling) des Beschleunigungssignals nur im Bereich der Reifenaufstandsfläche notwendig. In diesem Bereich befindet sich der Sensor weniger als 10% der Reifenumlaufzeit. Aufgrund dessen kann außerhalb der Reifenaufstandsfläche der entsprechende Schaltungsteil abgeschaltet werden.

Aus dem vorgestellten Verfahren der Umlaufzeitbestimmung kann die Zentripetalbeschleunigung oder ein zu dieser proportionaler Wert abgeleitet werden. Wird die Umlaufzeit zu Bestimmung der Zentripetalbeschleunigung herangezogen, ist die genaue Kenntnis des Reifenradius nicht mehr notwendig.

Neben der Beladung oder Reifenprofiltiefe haben auch Reifendruck und -temperatur Einfluss auf die Aufstandsfläche. Diese Abhängigkeiten können im Sensormodul oder einer zentralen Auswerteeinheit im Fahrzeug hinterlegt sein. Auch ist es vorteilhaft, wenn die minimal und maximal zulässige Aufstandslänge bzgl. Radlast und Profiltiefe in Abhängigkeit von Druck und Temperatur bekannt und hinterlegt ist.

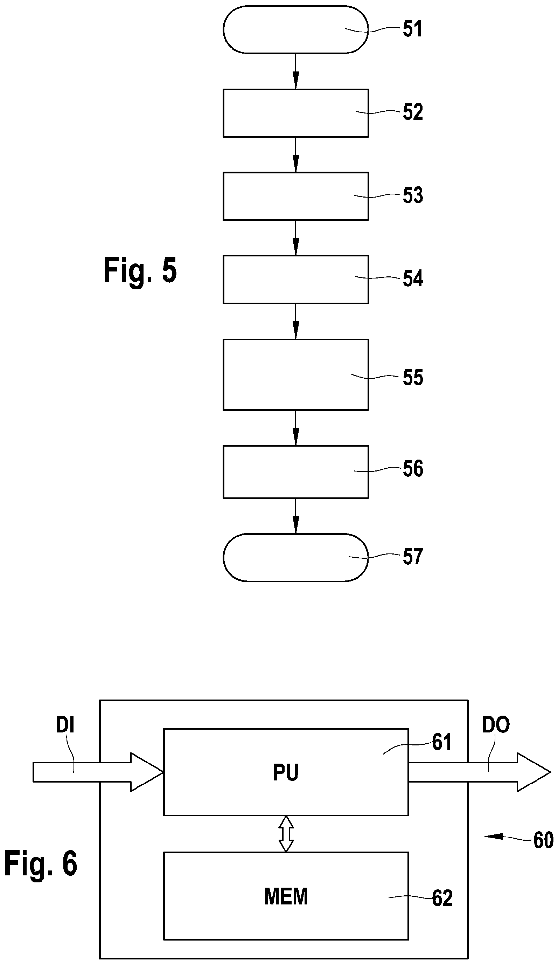

In Fig. 5 ist ein Flussdiagramm des erfindungsgemäßen Verfahrens gezeigt. Im Schritt 51 wird das Verfahren gestartet. Das Verfahren kann bei jedem Fahrtbeginn gestartet werden und/oder periodisch während der Fahrt ablaufen. Nach Beginn des Verfahrens werden im Schritt 52 die Initialwerte eingelesen. Diese Werte können Standardwerte (leer bzw. voll beladen) sein oder Werte einer vorangegangenen Messung, die im Speicher abgelegt wurden. Handelt es sich um Werte aus einer vorangegangenen Messung, kann neben einer quantitativen Bestimmung des Beladungswertes auch eine qualitative Bestimmung der Beladungsänderung (leichter - Abnahme der Beladung, schwerer - Zunahme der Beladung) erfasst werden. Im Schritt 53 wird ein von dem Beschleunigungssensor 12 abgegebenes Signal aufgenommen. Im Schritt 54 wird das aufgenommene Signal in ein Spektrum transformiert. Das transformierte Signal wird anschließend im Schritt 55 mit dem in Schritt 52 ausgelesenen Initialwert verglichen. Dies kann ein Frequenzvergleich oder ein Amplitudenvergleich sein. Aufgrund des Ergebnisses des Vergleichs wird im Schritt 56 eine Beladungs- / Zuladungsänderung erkannt. Im Anschluss an Schritt 56 wird das Verfahren im Schritt 57 beendet.

Fig. 6 zeigt ein schematisches Blockdiagramm einer alternativen, softwarebasierten Ausführung der vorgeschlagenen Vorrichtung 60 zur Bestimmung einer Änderung der Aufstandsfläche eines Reifens. Die vorgeschlagene Vorrichtung enthält eine Verarbeitungseinheit PU 61, die irgendein Prozessor oder Computer mit einer Steuereinheit sein kann, wobei die Steuereinheit Steuerungen basierend auf Softwareroutinen eines in einem Speicher MEM 62 gespeicherten Programms ausführt. Programmbefehle werden aus dem Speicher 62 geholt und in die Steuereinheit der Verarbeitungseinheit 61 geladen, um die Verarbeitungsschritte der oben, mit Bezug auf die Figuren 2a - c, beschriebenen Funktionalitäten auszuführen. Diese Verarbeitungsschritte können auf der Basis von Eingangsdaten DI ausgeführt werden und Ausgangsdaten DO erzeugen, wobei die Eingangsdaten mindestens eines der Drehung des Reifens zuordenbaren Beschleunigungssignal entsprechen können, und die Ausgangsdaten DO einem der Änderung der Aufstandsfläche des Reifens entsprechenden Signal entsprechen können.

Es wurde ein Verfahren und eine Vorrichtung zur Bestimmung einer Änderung der Aufstandsfläche eines Reifens, auf Grundlage eines der Drehung des Reifens zuordenbaren, von einem Sensor abgegebenen Beschleunigungssignals beschrieben, wobei die Bestimmung mindestens durch die folgenden Schritte erfolgt: Aufnehmen mindestens eines der Drehung des Reifens zuordenbaren Beschleunigungssignals g₁; Auslesen eines gespeicherten, der Drehung des Reifens zuordenbaren Referenzbeschleunigungssignals g₀; Bilden einer Differenz aus dem Beschleunigungssignal g₁ und dem Referenzbeschleunigungssignals g₀; und/oder Bestimmen der Änderung der Aufstandsfläche des Reifens auf Grundlage der gebildeten Differenz der Beschleunigungssignale.

Es wird darauf hingewiesen, dass die vorgeschlagenen Lösungen entsprechend den oben genannten Ausführungsformen als Softwaremodule und/oder Hardwaremodule in den entsprechenden Funktionsblöcken implementiert werden können.

## Patentansprüche

1. Verfahren zur Bestimmung einer Beladung eines Fahrzeugs, auf Grundlage eines der Drehung des Reifens (11) zuordenbaren, von einem Sensor (12) abgegebenen Signals, das einer Beschleunigung entspricht, wobei der Sensor (12) an dem Reifen angebracht ist, wobei die Bestimmung die folgenden Schritte aufweist:
- Aufnehmen mindestens eines, der Drehung des Reifens zuordenbaren Beschleunigungssignals, das einer Beschleunigung (g₁) entspricht,
**dadurch gekennzeichnet, dass** folgender Schritt durchgeführt wird
- Ableitung einer Beladung des Fahrzeugs in Abhängigkeit von dem Beschleunigungssignal, wobei zur Ableitung der Beladung das Spektrum des Beschleunigungssignals verwendet wird.

2. Verfahren nach Anspruch 1, **dadurch gekennzeichnet dass** das Beschleunigungssignal einem PWM-Signal entspricht und die Beladung in Abhängigkeit von dem Tastverhältnis des PWM-Signals erkannt wird.

3. Verfahren nach einem der vorhergehenden Ansprüche, **dadurch gekennzeichnet dass** eine Beladungsänderung in Abhängigkeit der frequenzdiskreten Beschleunigungsanteile des unteren Frequenzbereichs erkannt wird.

4. Verfahren nach mindestens einem der vorangegangenen Ansprüche, **dadurch gekennzeichnet, dass** mehrere, der Drehung des Reifens (11) zuordenbaren Signale, die der Beschleunigung (g₁) entsprechen, aufgenommen werden, und aus den mehreren Signalen ein Mittelwert gebildet wird.

5. Vorrichtung zur Bestimmung einer Beladung eines Fahrzeugs derart eingerichtet, um eine Änderung der Beladung, auf Grundlage eines der Drehung des Reifens (11) zuordenbaren, von einem an einem Reifen angebrachten Sensor (12) abgegebenen Signals, das einer Beschleunigung entspricht, entsprechend dem Verfahren nach einem der Ansprüche 1 - 4 zu bestimmen.

6. Computerprogramm, das alle Schritte eines Verfahrens nach einem der Ansprüche 1 - 4 ausführt, wenn es auf einem Rechengerät abläuft.

7. Computerprogrammprodukt mit Programmcode, der auf einem maschinenlesbaren Träger gespeichert ist, zur Durchführung des Verfahrens nach einem der Ansprüche 1 - 4, wenn das Programm auf einem Computer oder Steuergerät ausgeführt wird.

## Claims

1. Method for determining a loading of a vehicle on the basis of a signal which can be assigned to the rotation of the tyre (11), is output by a sensor (12) and corresponds to an acceleration, wherein the sensor (12) is attached to the tyre, wherein the determination comprises the following steps:
- recording at least one acceleration signal which can be assigned to the rotation of the tyre and corresponds to an acceleration (g₁),
**characterized in that** the following step is carried out
- derivation of a loading of the vehicle as a function of the acceleration signal, wherein the spectrum of the acceleration signal is used to derive the loading.

2. Method according to Claim 1, **characterized in that** the acceleration signal corresponds to a PWM signal, and the loading is detected as a function of the pulse duty factor of the PWM signal.

3. Method according to one of the preceding claims, **characterized in that** a change in the loading is detected as a function of the frequency-discrete acceleration components of the lower frequency range.

4. Method according to at least one of the preceding claims, **characterized in that** a plurality of signals which can be assigned to the rotation of the tyre (11) and which correspond to the acceleration (g₁) are recorded, and a mean value is formed from the plurality of signals.

5. Device for determining a loading of a vehicle, designed to determine a change in the loading on the basis of a signal which can be assigned to the rotation of the tyre (11), is output by a sensor (12) which is attached to a tyre and corresponds to an acceleration, corresponding to the method according to one of Claims 1 to 4.

6. Computer program which executes all the steps of a method according to one of Claims 1 to 4 when it runs on a computing unit.

7. Computer program product with program code which is stored on a machine-readable carrier, for carrying out the method according to one of Claims 1 to 4 when the program is executed on a computer or control unit.

## Revendications

1. Procédé pour déterminer une charge d'un véhicule sur la base d'un signal délivré par un capteur (12), pouvant être associé à la rotation du pneumatique (11) et correspondant à une accélération, dans lequel le capteur (12) est monté sur le pneumatique, dans lequel la détermination comprend les étapes suivantes :
- acquisition d'au moins un signal d'accélération pouvant être associé à la rotation du pneumatique et correspondant à une accélération (g₁), **caractérisé en ce que** l'étape suivante est effectuée :
- déduction d'une charge du véhicule en fonction du signal d'accélération, dans lequel le spectre du signal d'accélération est utilisé pour déduire la charge.

2. Procédé selon la revendication 1, **caractérisé en ce que** le signal d'accélération correspond à un signal PWM et **en ce que** la charge est détectée en fonction du rapport cyclique du signal PWM.

3. Procédé selon l'une des revendications précédentes, **caractérisé en ce qu'**une variation de charge est détectée en fonction des composantes d'accélération discrètes en fréquence de la plage des basses fréquences.

4. Procédé selon au moins l'une des revendications précédentes, **caractérisé en ce qu'**une pluralité de signaux pouvant être associés à la rotation du pneumatique (11) et correspondant à l'accélération (g₁) sont acquis et **en ce qu'**une valeur moyenne est calculée à partir de la pluralité de signaux.

5. Dispositif de détermination d'une charge d'un véhicule, conçu pour déterminer une variation de la charge sur la base d'un signal correspondant à une accélération, qui est délivré par un capteur (12) monté sur un pneumatique et qui peut être associé à la rotation du pneumatique (11), conformément au procédé selon l'une des revendications 1 à 4.

6. Programme d'ordinateur qui met en oeuvre toutes les étapes d'un procédé selon l'une des revendications 1 à 4 lorsqu'il est exécuté sur un ordinateur.

7. Programme d'ordinateur comportant un code de programme qui est stocké sur un support lisible par machine, destiné à mettre en oeuvre le procédé selon l'une des revendications 1 à 4 lorsque le programme est exécuté sur un ordinateur ou un appareil de commande.
